# EUROPEAN PATENT APPLICATION

(11) **EP 4 523 910 A1**
(43) Date of publication of application: **19.03.2025**
(21) Application number: 23803572.9
(22) Date of filing: 10.05.2023
(51) Int. Cl.: B32B 27/32, B32B 27/16, B65D 65/40

(54) **LAYERED BODY AND PACKAGING BAG**

(30) Priority: 11.05.2022 JP 2022078169
(71) Applicant: Zacros Corporation, Tokyo 112-0002 (JP)
(72) Inventor: KUWABARA, Hiroshi, Tokyo 112-0002 (JP); MORI, Toshihiko, Tokyo 112-0002 (JP); ASAWA, Satoshi, Tokyo 112-0002 (JP)
(74) Representative: Lavoix
(86) International application number: PCT/JP2023/017532
(87) International publication number: WO 2023/219097

(57) **Abstract**

The layered body has a printed layer (13) made of EB-curable ink on a polyolefin-based resin layer (11) formed of a polyolefin-based resin. The layered body may have two or more polyolefin-based resin layers and the printed layer may be on the outer surface of the layered body.

## Description

### [Technical Field]

The present invention relates to a layered body and a packaging bag.

Priority is claimed on Japanese Patent Application No. 2022-078169, filed May 11, 2022, the content of which is incorporated herein by reference.

### [Background Art]

Patent Document 1 describes a packaging material in which a base film of polyamide, polyester, polypropylene, or the like is printed on using a printing ink such as an oil-based ink or a water-based ink, and then a heat-bondable film is laminated thereon.

Patent Document 2 describes a packaging bag using a base film of polypropylene, polyamide, polyester, or the like, in which a region around a pouring opening is reinforced using a curable resin such as an ultraviolet-curable resin, an electron beam-curable (EB-curable) resin, or a thermosetting resin.

### [Citation List]

### [Patent Document]

[Patent Document 1]
   Japanese Unexamined Patent Application, First Publication No. 2005-75351
[Patent Document 2]
   Japanese Unexamined Patent Application, First Publication No. 2004-338753

### [Summary of Invention]

### [Technical Problem]

Regarding the recovery of plastic container packaging after use, there is a problem in that packaging bags containing two or more types of resins are difficult to recycle as a plastic container packaging. In recent years, a mono-material container packaging that uses a single resin has been proposed to facilitate recycling. As a single resin, a polyethylene resin is inexpensive and easy to process. However, films and pouches made of polyethylene-based resins are easily scratched during processing and use. Colorless or white bags made from single-layer films have poor decorative properties, and multi-layer films with printed layers have issues with abrasion resistance.

Furthermore, for layered bodies used, for example, in packaging bags for detergent refills, a property of being able to be easily torn by hand from a notch or the like without using scissors (hereinafter, referred to as "hand tearability") is required.

The present invention has been made in consideration of the above circumstances, and an object thereof is to provide a layered body and a packaging bag that have excellent recyclability, abrasion resistance, and hand tearability.

### [Solution to Problem]

In order to solve the above problems, the present invention includes the following aspects.

A layered body of a first aspect includes a printed layer made of EB-curable ink on a polyolefin-based resin layer formed of a polyolefin-based resin.

According to a layered body of a second aspect, in the first aspect, the layered body may have two or more polyolefin-based resin layers and may have the printed layer on an outer surface of the layered body.

According to a layered body of a third aspect, in the second aspect, the two or more polyolefin-based resin layers may include a base material layer and a sealant layer made of a polyethylene resin-based layer.

According to a layered body of a fourth aspect, in the third aspect, the base material layer may be colored milky white.

According to a layered body of a fifth aspect, in the second to fourth aspects, the two or more polyolefin-based resin layers may be bonded to each other via an adhesive layer without the printed layer.

According to a packaging bag of a sixth aspect, at least one member is formed of the layered body according to any one of the aspects 1 to 5.

According to a packaging bag of a seventh aspect, in the sixth aspect, at least a body member may be formed of the layered body.

According to a packaging bag of an eighth aspect, in the sixth or seventh aspect, a bottom member having a folding line may be formed of the layered body.

### [Advantageous Effects of Invention]

According to the present invention, it is possible to provide a layered body and a packaging bag that have excellent recyclability, abrasion resistance, and hand tearability by having a printed layer made of EB-curable ink.

### [Brief Description of Drawings]

FIG. 1 is a cross-sectional view showing an example of a layered body.
FIG. 2 is a front view showing an example of a packaging bag.

### [Description of Embodiments]

The present invention will be described below with reference to preferred embodiments. A layered body according to the present embodiment includes a printed layer made of EB-curable ink on a polyolefin-based resin layer formed of a polyolefin-based resin.

The layered body of the embodiment is formed of a polyolefin-based resin layer mainly made of a polyolefin-based resin. Therefore, the layered body of the embodiment can be used to realize a mono-material container packaging. The polyolefin-based resin is not particularly limited as long as it is a polymer mainly configured of an olefin, and examples thereof include a polyethylene-based resin and a polypropylene-based resin.

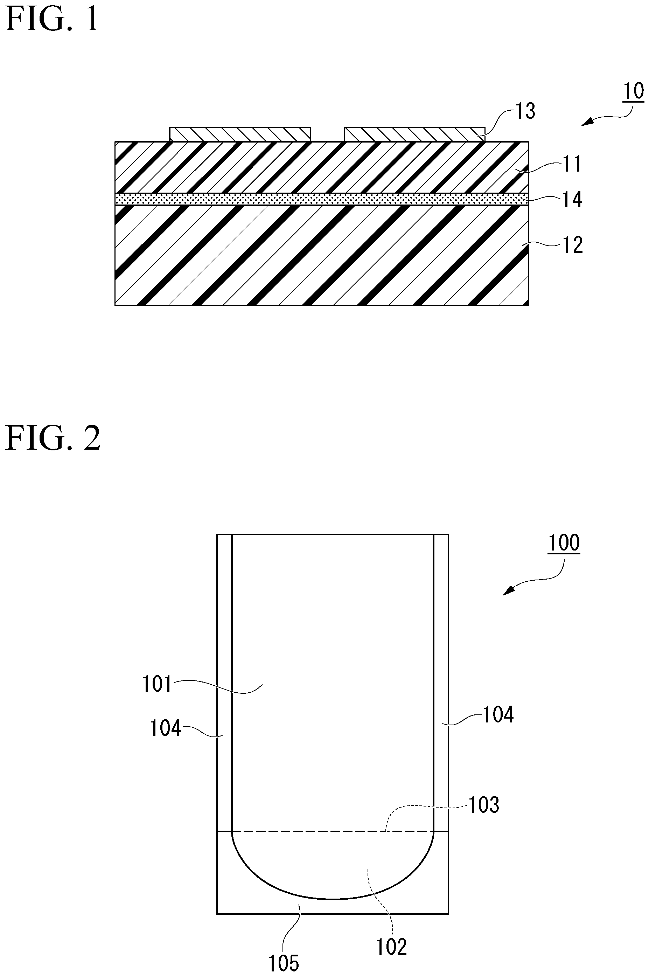

FIG. 1 shows a layered body 10 according to an embodiment. The layered body 10 has a base material layer 11 and a sealant layer 12 each made of a polyolefin-based resin layer, and a printed layer 13 made of EB-curable ink. The printed layer 13 in the illustrated example is formed on an outer surface of the layered body 10. The polyolefin-based resin layer is at least one layer, and may be two or more layers. Specifically, examples thereof include the base material layer 11 and the sealant layer 12 which will be described later, but the present invention is not limited thereto.

The EB-curable ink is ink that is cured by an electron beam (EB) after printing. It generally contains a colorant and an EB-curable polymerizable compound (monomer, oligomer). Furthermore, if necessary, a resin (a polymer) or the like can be added to the ink. Upon curing, the EB-curable ink forms a film that is harder than a thermoplastic resin such as a polyolefin-based resin.

Abrasion resistance of the layered body 10 can be improved by laminating the printed layer 13 made of the EB-curable ink on the polyolefin-based resin layer. As a result, even when a polyolefin-based resin, such as a polyethylene-based resin, which has poor abrasion resistance, is used for the layered body 10, the occurrence of scratches during processing or use can be curbed.

In addition, by providing the printed layer 13 made of the EB-curable ink, the layered body 10 can be given appropriate hardness, and thus when the layered body 10 is torn by hand, stretching of the layered body 10 can be effectively curbed. Therefore, the layered body 10 has good hand tearability.

The layered body 10 may have the base material layer 11 and the sealant layer 12 made of a polyethylene-based resin layer as polyolefin-based resin layers. The printed layer 13 may be provided on the outer surface of the base material layer 11. The printed layer 13 may be provided on a single-layer polyolefin-based resin film.

The polymerizable compound used in the EB-curable ink may be any compound that can polymerize and cure the printed layer when irradiated with the electron beam (EB). Since the EB has high energy, EB curing does not require a reaction initiator such as a photoinitiator for ultraviolet (UV) curing or a thermal initiator for heat curing.

The polymerizable compound may be a monofunctional monomer having one polymerizable functional group per molecule, or a polyfunctional monomer having two or more polymerizable functional groups per molecule, and these may be blended in in an appropriate proportion. The polymerizable functional group may be an unsaturated functional group such as a vinyl group, an allyl group, or a (meth)acrylate group. (Meth)acrylate is a general term for acrylate or methacrylate. The EB-curable ink may contain two or more types of polymerizable compounds.

Examples of the monofunctional monomer used in the EB-curable ink include acrylamide compounds such as N-acryloylmorpholine, N-vinyl compounds such as N-vinylcaprolactam, monofunctional (meth)acrylates, and the like. Examples of the monofunctional (meth)acrylate include acyclic (meth)acrylates such as alkyl (meth)acrylates, aromatic (meth)acrylates such as benzyl (meth)acrylates, monocyclic (meth)acrylates such as cycloalkyl (meth)acrylates, polycyclic (meth)acrylates such as isobornyl (meth)acrylates, hydroxyl group-containing (meth)acrylates such as hydroxyalkyl (meth)acrylates, ether group-containing (meth)acrylates such as alkoxyalkyl (meth)acrylates, and the like.

Examples of the polyfunctional monomer used in the EB-curable ink include divinyl ether compounds, allyl ether compounds, polyfunctional (meth)acrylates, and the like. Examples of the polyfunctional (meth)acrylate include alkylene glycol di(meth)acrylates, polyalkylene glycol di(meth)acrylates, trimethylolpropane tri(meth)acrylates, glycerin tri(meth)acrylates, pentaerythritol tri(meth)acrylates, pentaerythritol tetra(meth)acrylates, cyclohexanedimethanol di(meth)acrylates, and the like.

The colorant used in the EB-curable ink includes organic pigments, inorganic pigments, carbon pigments, dyes, and the like. The EB-curable ink may contain two or more types of colorants. From the viewpoint of durability, and the like, pigments such as phthalocyanine-based pigments, quinacridone-based pigments, metal lake pigments, rhodamine-based pigments, azo-based pigments, carbon black, and titanium oxides are preferred.

The resin used in the EB-curable ink is not particularly limited, but is preferably a resin that has excellent solubility in a polymerizable compound such as (meth)acrylate. Specific examples of the resin used in the EB-curable ink include acrylic resins, alkyd resins, saturated polyester resins, vinyl chloride resins, vinyl acetate resins, maleic acid-based resins, polyamide resins, urethane resins, epoxy resins, and the like.

The EB-curable ink may contain desired additives. Examples of the additives for the EB-curable ink include a polymerization inhibitor, a dispersant, an antioxidant, an ultraviolet-absorbing agent, an organic solvent, silicone, and the like. When the EB-curable ink is a solvent-free type, it is preferable since it is possible to curb the use of volatile organic compounds (VOCs) and to reduce an amount of solvent remaining in the polyolefin-based resin.

The printed layer 13 can be formed by printing the EB-curable ink in a solid or patterned manner by a printing method such as gravure printing, letterpress printing, offset printing, screen printing, inkjet printing, or the like and then curing the ink with an EB. A thickness of the printed layer 13 is not particularly limited, but may be about 0.5 to 10 µm.

The EB curing process of the EB-curable ink is carried out by irradiating an ink coating on a printing base material with a beam generated by accelerating electrons at a voltage of, for example, about 10 to 100 kV. In order to curb polymerization inhibition due to oxygen (O₂) and generation of ozone (O₃), it is preferable to radiate the electron beam in an inert gas atmosphere such as nitrogen (N₂) or in a vacuum atmosphere. The EB curing can be completed in a short time allowing excellent productivity.

The printed layer 13 may be formed on the entire surface of the polyolefin-based resin layer, or may be formed on part of the surface of the polyolefin-based resin layer. Two or more printed layers 13 may be superimposed. A transparent protective coating layer (a top coat) may be provided on the printed layer 13, but a proportion of different materials can be reduced by omitting the protective coating layer.

The base material layer 11 of the layered body 10 may be a stretched polyolefin-based resin layer or a non-stretched polyolefin-based resin layer. The base material layer 11 may be made of a polyethylene-based resin having a relatively high density, such as medium-density polyethylene (MDPE) or high-density polyethylene (HDPE), or a polypropylene-based resin. The base material layer 11 may be formed of one type of polyolefin-based resin, or may contain two or more types of polyolefin-based resins.

The base material layer 11 may be one layer or two or more layers. When the base material layer 11 is two or more layers, resins in each of the layers may be the same as or different from each other. For example, different base material layers 11 may be formed using resin layers having different densities, stretching directions, additives, and the like, among polyethylene-based resins, and then may be laminated on the layered body 10. The thickness of the base material layer 11 is not particularly limited, but may be, for example, about 10 to 50 µm.

The sealant layer 12 of the layered body 10 is preferably formed of a sealant resin. Examples of the sealant resin include polyethylene-based resins having relatively low density, such as linear low-density polyethylene (LLDPE) and low-density polyethylene (LDPE), as well as non-stretched polyethylene-based resins and polypropylene-based resins. The sealant layer 12 may be formed of one type of polyolefin-based resin, or may contain two or more types of polyolefin-based resins. The base material layer 11 may be colored milky white or the like. Concealability can be improved by coloring the base material layer 11 milky white.

A thickness of the sealant layer 12 is not particularly limited, but may be, for example, about 50 to 180 µm. The sealant layer 12 may be a single-layer sealant film or may be a multi-layer sealant film. The multi-layer sealant film can be formed by laminating two or more layers of film-like sealant resin by coextrusion, extrusion lamination, sandwich lamination, thermal lamination or the like.

The base material layer 11 and the sealant layer 12 are preferably joined together via an adhesive layer 14. When two or more base material layers 11 are laminated, the layers can also be laminated with the adhesive layer 14.

The adhesive layer 14 may be formed of an adhesive or an anchor coating agent. The material for forming the adhesive layer 14 is not particularly limited, but examples thereof include urethane-based compounds, epoxy-based compounds, isocyanate-based compounds, and organic titanium compounds such as polyethyleneimine and titanium alkoxide. A thickness of the adhesive layer 14 is, for example, about 0. 1 to 10 µm, about 1 to 6 µm, or about 3 to 4 µm.

It is preferable that two or more polyolefin-based resin layers 11 and 12, such as the base material layer 11 and the sealant layer 12, be bonded together via the adhesive layer 14 without the printed layer. Thus, when the polyolefin-based resin layers 11 and 12 are bonded together via the adhesive layer 14, a step due to the printed layer is unlikely to occur, and therefore an adhesive strength can be stabilized.

In order to bond the layers of the layered body 10, an extruded resin layer of a polyolefin-based resin may be laminated between the base material layer 11 and the sealant layer 12. When an extruded resin layer is used between the layers, the adhesive layer 14 can be omitted. The layered body 10 may have a polyolefin-based resin layer in addition to the base material layer 11, the sealant layer 12, and the extruded resin layer.

The polyethylene-based resin used in the polyethylene-based resin layers such as the base material layer 11 and the sealant layer 12 may be a homopolymer of ethylene or a copolymer mainly composed of ethylene. Examples of monomers (comonomers) other than ethylene include one or more of α-olefins such as 1-butene, 1-hexene, and 1-octene, cyclic olefins such as norbornene, and vinyl-based monomers such as vinyl acetate, vinyl chloride, and acrylic acid. When the polyethylene-based resin is copolymerized with a monomer having an ester group such as vinyl acetate, some of the ester groups may be saponified to form a copolymer containing vinyl alcohol.

A proportion of ethylene in the constituent monomers of the polyethylene-based resin is preferably 50% by weight or more, and may be, for example, 80 to 100% by weight. The ethylene or comonomer used in the polyethylene-based resin may be a compound derived from a fossil resource such as petroleum, or may be a compound derived from biomass such as plants. The resin contained in the polyethylene-based resin layer may be only a polyethylene-based resin. The material forming the polyethylene-based resin layer may be one type of polyethylene-based resin or a blend of two or more types of polyethylene-based resins. The polyethylene-based resin layer may contain recycled polyethylene.

A polypropylene (PP)-based resin may be used for the polyolefin-based resin layer such as the base material layer 11 and the sealant layer 12. The polypropylene-based resin may be a homopolymer of propylene (homo PP), or may be a random copolymer (random PP) or a block copolymer (block PP) such as a propylene-ethylene copolymer or the like. Examples of the monomers (comonomers) other than propylene include one or more of α-olefins such as ethylene, 1-butene, 1-hexene, and 1-octene, and vinyl-based monomers such as vinyl acetate, vinyl chloride, and acrylic acid. When a comonomer is used in the polypropylene-based resin, the comonomer may be one type or two or more types.

A proportion of propylene in the constituent monomers of the polypropylene-based resin is preferably 50% by weight or more, and may be, for example, 80 to 100% by weight. The propylene or comonomer used in the polypropylene-based resin may be a compound derived from a fossil resource such as petroleum, or may be a compound derived from biomass such as plants. The resin contained in the polypropylene-based resin layer may be only a polypropylene-based resin. The material forming the polypropylene-based resin layer may be one type of polypropylene-based resin or a blend of two or more types of polypropylene-based resins. The polypropylene-based resin layer may contain recycled polypropylene.

The resin contained in the polyolefin-based resin layer such as the base material layer 11 and the sealant layer 12 may be only a polyolefin-based resin, only a polyethylene-based resin, or only a polypropylene-based resin. The polyolefin-based resin layers for the base material layer 11 and the sealant layer 12 may contain additives other than the resin. The additives are not particularly limited, but examples thereof include antioxidants, lubricants, antiblocking agents, flame retardants, ultraviolet absorbers, light stabilizers, antistatic agents, colorants, crosslinking agents, and the like. The additive may be a component that is compatible with the resin, or a component that is incompatible with the resin.

At least a portion of the polyolefin-based resin may contain the recycled polyolefin-based resin. A method for recycling the polyolefin-based resin is not particularly limited, and may be chemical recycling in which used resins are decomposed into monomers such as ethylene and then polymerized again, and may be mechanical recycling in which used resins are regenerated while still in the polymer form through processes such as crushing and sorting. A mixture of recycled and new resins may be used.

With respect to the total weight of the layered body 10 in the above-described embodiment, it is preferable that the total of the specific resins is 90% by weight or more and the total of the materials other than the specific resins is 10% by weight or less, and it is more preferable that the total of the specific resins is 95% by weight or more and the total of the materials other than the specific resins is 5% by weight or less. Thus, even when an adhesive or the like is used in the layered body 10, a mono-material material of a specific resin can be realized. The specific resin may be, for example, any one of a polyolefin-based resin, a polyethylene resin, and a polypropylene resin. The layered body 10 may use two or more types of resins that fall under the specific resin.

The layered body 10 of the above-described embodiment is in the form of a layered film mainly made of a polyolefin-based resin such as a polyethylene-based resin, and can be used for various purposes. A method for forming the layered film is not particularly limited, but examples thereof include dry lamination, extrusion lamination, heat lamination, coextrusion, coating, and the like. Different methods may be used to laminate each of the layers. With the sealant layers facing each other, the layered body may be joined by fusion bonding.

The layered body 10 of the embodiment can be used to produce a package such as a packaging bag. At least one member of the package may be formed of the layered body 10. The uses of the package are not particularly limited, and may include disposable use, refilling, storage, storage of goods, and the like, but it is particularly preferable for use in refilling the contents one or more times into a main container used when the contents are consumed. In this case, the main container can be made durable for long-term use, and packaging of the refill container can be simplified. Also, the refill containers can be easily recycled when disposed of after the contents have been used up.

Furthermore, by using the layered body 10 having the printed layer 13 made of the EB-curable ink for a package such as the packaging bag, while abrasion resistance can be improved, the package can be opened smoothly by hand without using scissors or the like, and thus hand tearability can be improved.

Examples of the package include packaging bags such as pouches and bags, tubes, containers, sleeve packaging, strip packaging, and lid materials. Specific examples of the packaging bag include a three-sided sealed bag, a four-sided sealed bag, a pillow bag, a gusset bag, a standing pouch, and the like. When the layered body is a flexible layered film, a flexible package can be formed.

An example of a packaging bag that can be used as a standing pouch is shown in FIG. 2. This packaging bag 100 includes a pair of body members 101 and a bottom member 102 that is folded in half along a folding line 103. The body members 101 are disposed one at the front and one at the back. The front and rear body members 101 may have the same planar shape. The bottom member 102 is folded along a folding line 103 so that outer surfaces thereof face each other. Above the folding line 103, body seal portions 104 are formed on the left and right sides, and inner surfaces of the front and rear body members 101 are joined to each other.

The bottom member 102 is interposed between the front and rear body members 101 with the folding line 103 on the upper side. Below the folding line 103, a bottom seal portion 105 is formed joining the inner surface of the bottom member 102 to the inner surface of the body member 101. The bottom seal portion 105 joins regions of the bottom member 102 defined by the folding lines 103 to the body member 101 on the same side in a front-rear direction. By spreading the bottom member 102 along the folding lines 103, the packaging bag 100 can stand on its own.

When the packaging bag 100 has the body member 101 and the bottom member 102, the layered body 10 of the embodiment may be used for either the body member 101 or the bottom member 102, or may be used for both. By using the layered body 10 having the EB-curable printed layer 13 for the body member 101, wear of patterns, letters, or the like printed on the surface of the packaging bag 100 can be curbed. By using the layered body 10 having the EB-curable printed layer 13 for the bottom member 102, blocking of the bottom member 102 superimposed via the folding line 103 can be curbed.

After an EB-curable printed layer 13 is formed in a region on the body member 101 in which the body seal portion 104 or the bottom seal portion 105 is to be formed, the body member 101 may be heated from the outer surface side to form the body seal portion 104 or the bottom seal portion 105. Thus, it is possible to curb the body member 101 adhering to a heat seal member such as a seal bar.

The packaging bag 100 may have a filling opening, a pouring opening, or the like. For example, an opening may be provided between the front and rear body members 101 at the upper portion of the packaging bag 100, which can be used for filling or pouring the contents. After the contents are filled, the body members 101 may be joined together to seal the packaging bag 100. When opening the packaging bag 100, the portions in which the body members 101 were joined together can be easily torn apart. Although not particularly shown, the pouring opening may be formed in a thin protruding shape at the upper portion or corner of the packaging bag 100. The pouring opening may be a film type or spout type.

The dimensions of the package are not particularly limited, but for example, when it is used as a refill container, a height in an up-down direction is about 100 to 500 mm, a width in a right-left direction is about 70 to 300 mm, and a filling volume is about 100 cm³ to 5000 cm³. The state of the contents is not particularly limited, but may be fluids such as liquids, powders, and particles, or solids such as articles. The types of contents are not particularly limited, but examples thereof include detergents, medicines, cosmetics, pharmaceuticals, beverages, seasonings, inks, paints, fuels, and the like.

The package may be formed only of the layered body 10 of the embodiment, or may be combined with accessory members such as a label, a tag, a straw, an outer box, and the like. From the viewpoint of recycling, it is preferable that the accessory members can be separated from the package. **In** order to make it easier to open the package, an easy-to-open means such as perforations, notches, half-cut grooves, or the like may be formed around the periphery of an opening portion.

A method for recycling the layered body 10 or the packaging bag 100 of the embodiment after use is not particularly limited, and can be appropriately selected according to conditions at the time of collection, or the like. Since the layered body 10 of the embodiment can have a high ratio of the polyolefin-based resin, both the chemical recycling and mechanical recycling described above are possible. By recycling the layered body 10 or the packaging bag 100 of the embodiment, it is possible to regenerate the layered body 10 or the packaging bag 100 into the same type of product. The recycled material may be used for products such as paints, molded products, hydrocarbon oils, and the like.

Although the present invention has been described above on the basis of the preferred embodiment, the present invention is not limited to the above embodiment, and various modifications can be made without departing from the gist of the present invention. The modifications include addition, substitution, omission, and other changes of components.

### [Examples]

The present invention will be described more specifically below with reference to examples, but the present invention is not limited to these examples.

The layered bodies of Examples 1 and 2 and Comparative examples 1 to 3 have the following layer configurations, starting from the outermost layer.
Example 1: EB printing/PE 25 µm/PE 120 µm
Example 2: EB printing/OPP 20 µm/VMOPP 18 µm/PE 120 µm
Comparative example 1: PE 25 µm/PE 120 µm
Comparative example 2: OPP 20 µm/VMOPP 18 µm/PE 120 µm
Comparative example 3: PET 12 µm/NY 15 µm/PE 120 µm

In these layer structures, the "EB printing" represents a printed layer made of EB-curable ink, "PE" represents polyethylene, "OPP" represents stretched polypropylene, "VMOPP" represents stretched polypropylene with metal vapor deposition, "PET" represents polyethylene terephthalate, "NY" represents nylon, and µm values represent thicknesses.

An abrasion resistance test was carried out in accordance with 6.2.3 Abrasion resistance of JIS K 5701-1. Specifically, a sample layered body was rubbed using a color fastness rubbing tester (AB-301 manufactured by Tester Sangyo Co., Ltd.) and friction paper (BEMCOT (registered trademark) M-1, Asahi Kasei Corporation) under conditions of a load of 200 g and a speed of 30 reciprocations per minute, and then a surface condition was observed under a microscope to confirm the presence or absence of scratches.

A vibration test was carried out in accordance with the random vibration test of JIS Z 0232. Specifically, a vibration test was carried out on a freight in which 12 packaging bags (standing pouches, width: 140 mm, height: 235 mm, contents: 430 g of water) made of the sample layered body were packed in an exterior packaging (cardboard box, width: 200 mm, length: 350 mm, height: 250 mm), and then the appearance of the standing pouch (such as rubbing) was visually observed.

The recyclability was evaluated based on whether the layer configuration was a polyolefin mono-material.

The hand tearability was evaluated by forming a linear notch extending perpendicularly to an edge portion of the film-like layered body at the edge portion, and tearing the layered body by hand from the notch to see whether the film could be torn easily without stretching.

Test results are shown in Table 1.

**[Table 1]**

| | Abrasion resistance test | | | Vibration test | Recyclability | Hand tearability |
|---|---|---|---|---|---|---|
| | 10 times | 50 times | 100 times | | | |
| Example 1 | ○ | ○ | ○ | ○ | ○ | ○ |
| Example 2 | ○ | ○ | ○ | ○ | ○ | ○ |
| Comparative example 1 | × | × | × | ○ | ○ | × |
| Comparative example 2 | × | × | × | × | ○ | × |
| Comparative example 3 | × | × | × | ○ | × | ○ |

In the abrasion resistance test, no scratches were generated (∘) in Examples 1 and 2, while scratches were generated (×) in Comparative Examples 1 to 3.

In the vibration test, no rubbing occurred (∘) in Examples 1 and 2 and Comparative Examples 1 and 3, while rubbing occurred (×) in Comparative Example 2.

In terms of recyclability, Examples 1 and 2 and Comparative Examples 1 and 2 were good (∘) while Comparative Example 3 was poor (×).

In terms of hand-tearability, Examples 1 and 2 and Comparative Example 3 were good (∘), and Comparative Examples 1 and 2 were poor (×).

### [Industrial Applicability]

According to the present invention, by having a printed layer made of EB-curable ink on a polyolefin-based resin layer formed of a polyolefin-based resin, the present invention has excellent recyclability, abrasion resistance, and hand tearability, and therefore can be used industrially.

### [Reference Signs List]

- 10: Layered body
- 11: Base material (polyolefin-based resin layer)
- 12: Sealant layer (polyolefin-based resin layer)
- 13: Printed layer
- 14: Adhesive layer
- 100: Packaging bag
- 101: Body member
- 102: Bottom member
- 103: Folding line
- 104: Body seal portion
- 105: Bottom seal portion

## Claims

1. A layered body, comprising:
a printed layer made of EB-curable ink on a polyolefin-based resin layer formed of a polyolefin-based resin.

2. The layered body according to claim 1, wherein the layered body has two or more polyolefin-based resin layers and has the printed layer on an outer surface of the layered body.

3. The layered body according to claim 2, wherein the two or more polyolefin-based resin layers include a base material layer and a sealant layer made of a polyethylene resin-based layer.

4. The layered body according to claim 3, wherein the base material layer is colored milky white.

5. The layered body according to claim 2, wherein the two or more polyolefin-based resin layers are bonded to each other via an adhesive layer without the printed layer.

6. A packaging bag of which at least one member is formed of the layered body according to any one of claims 1 to 5.

7. The packaging bag according to claim 6, wherein at least a body member is formed of the layered body.

8. The packaging bag according to claim 6, wherein a bottom member having a folding line is formed of the layered body.
